# EUROPEAN PATENT SPECIFICATION

(11) **EP 3 347 531 B1**
(45) Date of publication and mention of the grant of the patent: **17.03.2021**
(21) Application number: 16847535.8
(22) Date of filing: 19.09.2016
(51) Int. Cl.: E02F 9/00, E02F 9/20, E02F 9/22, F15B 13/02

(54) **CONTROL VALVE COMPENSATION SYSTEM**
KOMPENSATIONSSYSTEM FÜR STEUERVENTIL
SYSTÈME DE COMPENSATION DE SOUPAPE DE COMMANDE

(30) Priority: 18.09.2015 US 201562220350 P
(43) Date of publication of application: 18.07.2018
(73) Proprietor: Rost Innovation LLC, Park Rapids, Michigan 56470 (US)
(72) Inventor: ROST, Alvin, Park Rapids, Michigan 56470 (US)
(74) Representative: Evans, Marc Nigel
(86) International application number: PCT/US2016/052473
(87) International publication number: WO 2017/049281

(56) References cited:
- US-A- 5 025 625
- US-A- 5 279 121
- US-A- 5 305 789
- US-A- 6 119 967
- US-A1- 2013 112 297

## Description

### BACKGROUND

### Field

Example embodiments in general relate to a Control Valve Compensation System for producing both a pre-compensated and a post-compensated load sensing hydraulic directional control valve module, wherein both configurations use the same components except for a sliding compensating component.

### Related Art

Any discussion of the related art throughout the specification should in no way be considered as an admission that such related art is widely known or forms part of common general knowledge in the field.

Control valves are widely used throughout a variety of industries. Hydraulic directional control valves are generally constructed to comprise either a pre-compensated configuration or a post-compensated configuration. In a pre-compensated configuration, module priority is provided by the control valve. In a post-compensated configuration, multiple modules are utilized to share the pump flow proportionally. Other desired functionality is accomplished by adding control components or logic controls adapted to control the sliding main component of the module.

Because of the inherent problems with the related art, there is a need for a new and improved Control Valve Compensation System for producing both a pre-compensated and a post-compensated load sensing hydraulic directional control valve module, wherein both configurations use the same components except for a sliding compensating component.

United States Patent application publication number US 2013/112297 A1 relates to hydraulic valve arrangements that may be assembled to provide pre-compensation or post-compensation using the same chassis body. A first type of main spool is disposed in a main passage and a first type of pressure compensator spool is disposed in a compensator passage to provide pressure pre-compensation. The first type of pressure compensator spool connects to a first pilot location and not to a second pilot location. A second type of main spool is disposed in the main passage and a second type of pressure compensator spool is disposed in the compensator passage to provide pressure post-compensation. The second type of pressure compensator spool connects to the second pilot location and not to the first pilot location. The valve arrangement may be switched from pre-compensation to post-compensation (or vice versa) by switching out the main spool and pressure compensator spool without making any other changes to the chassis body.

United States patent publication number US 5,025,625 A relates to a hydraulic control system for driving a plurality of actuators that includes directional control valves and pressure compensation valves, and at least one detection valve, the directional valves and the pressure compensation valves both corresponding in number to the actuators.

### SUMMARY

The present invention is defined by the appended independent claims. Certain more specific aspects are defined by the dependent claims.

An example is directed to a Control Valve Compensation System for producing both a pre-compensated and a post-compensated load sensing hydraulic directional control valve module, wherein both configurations use the same components except for a sliding compensating component. Such configurations allow manufacturers of such valves to reduce costs, such as manufacturing tooling costs and manufacturing testing costs. The present example also aids with increasing inventory turn numbers. Each of the control valve systems disclosed herein are adapted to covert from pre-compensated to post-compensated, or vice versa, by simply changing a sliding compensating component.

There has thus been outlined, rather broadly, some of the features of the Control Valve Compensation System in order that the detailed description thereof may be better understood, and in order that the present contribution to the art may be better appreciated. There are additional features of the Control Valve Compensation System that will be described hereinafter and that will form the subject matter of the claims appended hereto. In this respect, before explaining at least one example of the Control Valve Compensation System in detail, it is to be understood that the Control Valve Compensation System is not limited in its application to the details of construction or to the arrangements of the components set forth in the following description or illustrated in the drawings. The Control Valve Compensation System is capable of other examples and of being practiced and carried out in various ways. Also, it is to be understood that the phraseology and terminology employed herein are for the purpose of the description and should not be regarded as limiting.

### BRIEF DESCRIPTION OF THE DRAWINGS

Example embodiments will become more fully understood from the detailed description given herein below and the accompanying drawings, wherein like elements are represented by like reference characters, which are given by way of illustration only and thus are not limitative of the example embodiments herein.
Figure 1 is a sectional view of a first embodiment of a pre-compensated configuration of the present invention.
Figure 2 is a sectional view of a first embodiment of a post-compensated configuration of the present invention.
Figure 3 is a sectional view of a first embodiment of a pre-compensated configuration of the present invention in a working position.
Figure 4 is a sectional view of a first embodiment of a post-compensated configuration of the present invention in a working position.
Figure 5 is a sectional view of a second embodiment of a pre-compensated configuration of the present invention.
Figure 6 is a sectional view of a second embodiment of a post-compensated configuration of the present invention.

### DETAILED DESCRIPTION

### Overview.

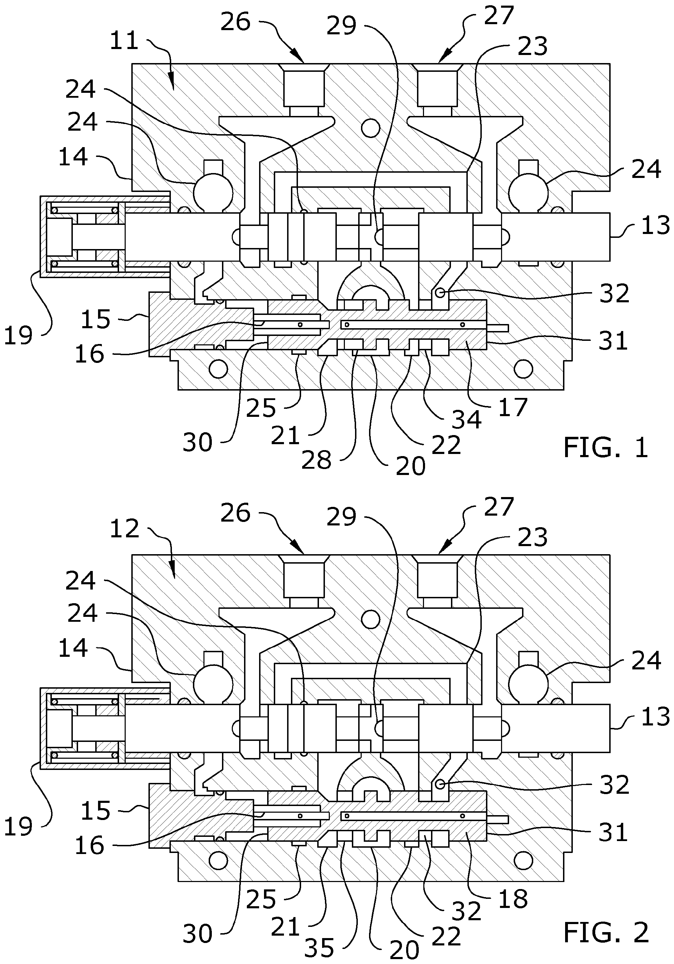

Turning now descriptively to the drawings, in which similar reference characters denote similar elements throughout the several views, Figures 1 through 6 illustrate a Control Valve Compensation System **10,** which comprises a hydraulic directional control valve housing **11, 12** which is adapted to be easily-interchangeable between a load sensing pre-compensated pressure configuration **11** and a load sensing post-compensated pressure configuration **12** by simply removing and replacing a different compensator assembly within the housing. The compensator assembly is adapted to direct oil flow through the housing **11, 12** while simultaneously providing compensation for the valve function. Directional valve assemblies may be provided, with the valve assemblies functioning to provide post-compensated functions, pre-compensated functions, and mixed pre- and post-compensated functions. These directional valve functions can be reconfigured in the field by simply swapping the compensator assemblies to produce the desired functionality of the end-user at that particular time.

### B. Pre-Compensated Configuration.

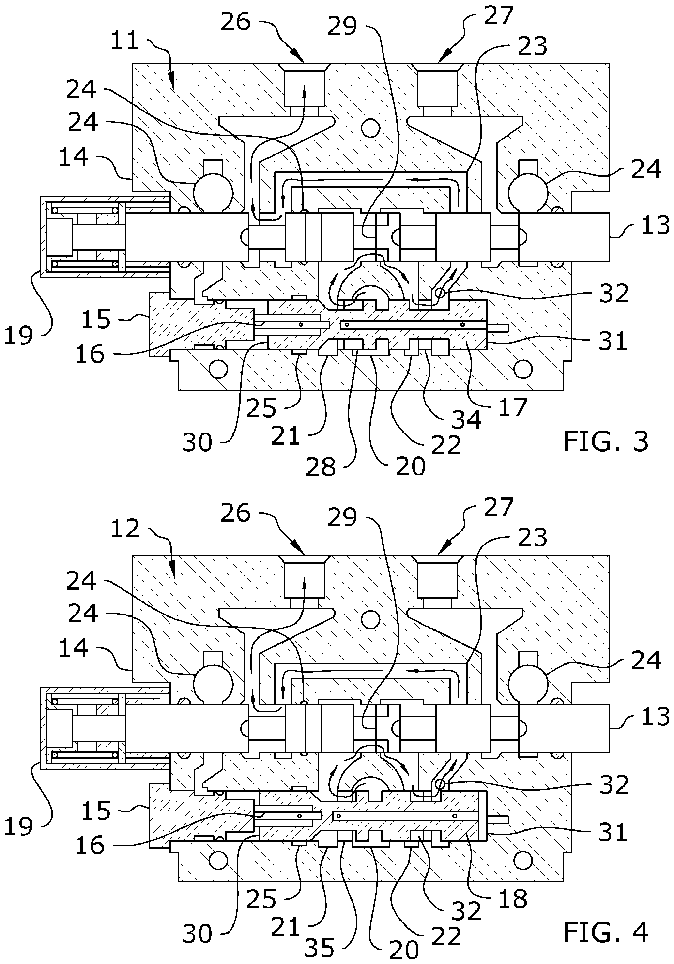

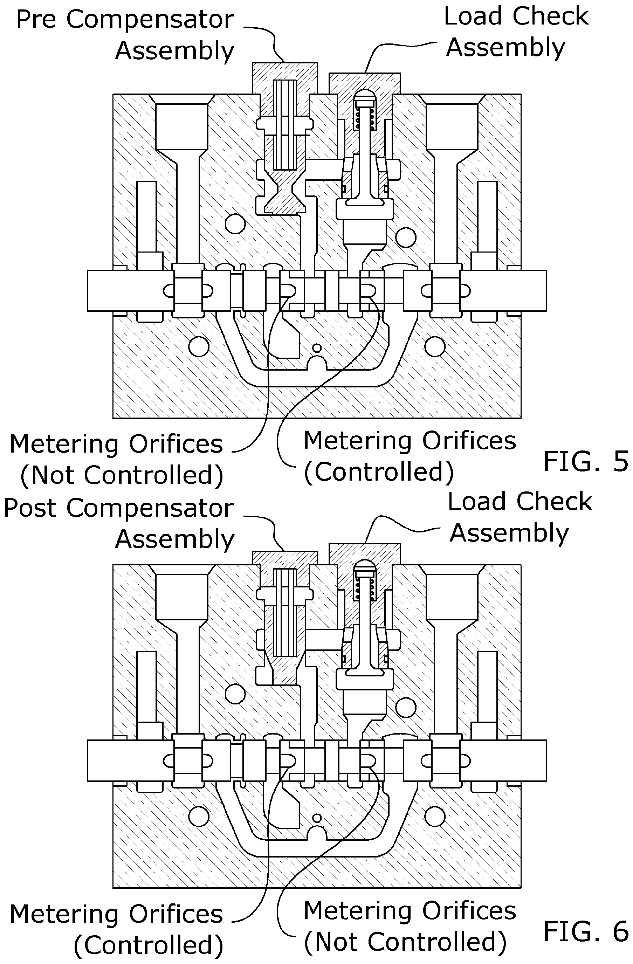

FIGS. 1, 3, and 5 illustrate different embodiments of the present invention configured for pre-compensation. FIG. 1 illustrates the pre-compensation configuration. FIG. 3 illustrates the pre-compensation configuration in a work position. FIG. 5 illustrates an alternate embodiment of the pre-compensation configuration in which the compensator is positioned perpendicular with respect to the main control unit.

As shown in FIGS. 1 and 3, the pre-compensated configuration **11** comprises a valve body **14** with a plurality of internal flow passageways **20, 21, 22, 23, 24, 26, 27.** It should be noted that the number, configuration, orientation, and types of passageways **20, 21, 22, 23, 24, 26, 27** utilized may vary in different embodiments of the present invention. In the exemplary embodiment shown in the figures, these include a power passageway **20,** a first intermediate passageway **21,** a second intermediate passageway **22,** a loop passage **23,** one or more return passages **24,** and a plurality of work ports **26, 27.**

The pre-compensated configuration **11** further comprises a selectable valve spool **13.** Various types of spools may be utilized, and the types of spools shown in the figures should not be construed as limiting on the scope of the present invention. The selectable valve spool **13** may include a plurality of control notches **29.** A pre-compensator piston **17** is provided which may include a compensating aperture **28.** The spring **16** shown in the figures is generally biased to be normally open in the pre-compensated configuration **11.**

When the selectable valve spool **13** is positioned toward a first side of the housing **11** (i.e. to the right side as shown in the figures), fluid will flow from the power passage **20** across the compensator piston **17** and notches **28** into the first intermediate passage **21.** After the first intermediate passage **21,** the fluid will continue onward to the selectable valve spool **13** and across the selectable valve spool notches **29** into the second intermediate passage **22.** From the second intermediate passage **22,** the fluid flows by the compensator piston **17** at undercut **34** and into the loop passage **23,** where the selectable valve spool **13** directs fluid through a passage into the powered work port **26.**

At all times during fluid flow, the compensator piston **17** ends **30, 31** are adapted to sense pressure, such as power passageway **20** pressure on end **31** through a sensing compensator passage internally. Power passage pressure on end **31** is measured internally through the compensator **17** and reduced pressure on end **30** is measured internally through the compensator **17** from the artificial pressure passage **25.** By balancing the pressure on the compensator piston end **31** with the pressure on the compensator end **30** and the biasing spring **16,** fine metering may be provided for the selectable valve spool **13** and control notches **29.**

Returning fluid from the working function enters the work port **27,** enters the body passage **27,** and flows across the control notches to the return passage **24.** Reversing the position of the selectable valve spool **13** to the second side of the housing (i.e. to the left side as shown in the figures) reverses the flows inside the valve powering the opposite work port **27** and returning to the opposite work port **26.**

### C. Post-Compensated Configuration.

FIGS. 2, 4, and 6 illustrate different embodiments of the present invention configured for post-compensation. FIG. 2 illustrates the post-compensation configuration. FIG. 4 illustrates the post-compensation configuration in a working position. FIG. 6 illustrates an alternate embodiment of the post-compensation configuration in which the compensator is positioned perpendicular with respect to the main control unit.

As shown in FIGS. 2 and 4, the post-compensated configuration **12** comprises a valve body **14** with a plurality of internal flow passageways **20, 21, 22, 23, 24, 26, 27.** It should be noted that the number, configuration, orientation, and types of passageways **20, 21, 22, 23, 24, 26, 27** utilized may vary in different embodiments of the present invention. In the exemplary embodiment shown in the figures, these include a power passageway **20,** a first intermediate passageway **21,** a second intermediate passageway **22,** a loop passage **23,** one or more return passages **24,** and a plurality of work ports **26, 27.**

The post-compensated configuration **12** further comprises a selectable valve spool **13.** Various types of spools may be utilized, and the types of spools shown in the figures should not be construed as limiting on the scope of the present invention. The selectable valve spool **13** may include a plurality of control notches **29.** A post-compensator piston **18** is provided which may include metering notches **32.** The spring **16** shown in the figures is generally biased to be normally closed in the post-compensated configuration **12.**

When the selectable valve spool **13** is positioned toward a first side of the housing (i.e. to the right side as shown in the figures), fluid flows from the power passage **20,** across the compensator piston **18** at undercut **35** and into the first intermediate passage **21.** From there, the fluid flows onto the selectable valve spool **13** and across the selectable valve spool notches **29** into the second intermediate passage **22.** From the second intermediate passage **22,** the fluid flows by the compensator piston **18** and compensating aperture **32** into the loop passage **23,** where the selectable valve spool **13** directs fluid into a passageway to the powered work port **26.**

At all times during fluid flow, the compensator **18** piston ends **30, 31** sense multiple pressures. Power passage pressure on end **31** is measured internally through the compensator **18** and reduced pressure on end **30** is measure internally through the compensator **18** from the artificial pressure passage **25.** By balancing the pressure on compensator **18** piston end **31** with the pressure on compensator **18** end **30** and the biasing spring **16,** fine metering may be provided for the selectable valve spool **13** and control notches **29.** Returning fluid from the working function enters work port **27,** through an interconnected passageway **27,** and flow across the control notches to the body return passage **24.** Reversing the position of the selectable valve spool **13** toward the second side of the housing (i.e. to the left side as shown in the figures) reverses the flows inside the present invention powering the opposite work port **27** and returning to the opposite work port **26.**

### D. Alternate Embodiments.

It should be appreciated that various aspects of the present invention may be altered in different embodiments of the present invention. For example, actuators may be utilized to control the sliding directional control component **13** of the modules. The actuators may be controlled in various manners, including electrically, hydraulically, pneumatically, or by computer logic to have the modules function in desired modes.

FIGS. 5 and 6 illustrate an alternate embodiment of both the pre-compensated configuration **11** and the post-compensated configuration **12.** While FIGS. 1 - 4 illustrate an embodiment in which the compensator is parallel to the main control component, FIGS. 5 - 6 illustrate an embodiment in which the compensator is perpendicular to the main control component. In the latter embodiment, the compensator controls only one set of metering orifices and does not bypass any flow in the flow stream. The post-compensator controls the upstream metering orifices and the pre-compensator controls the downstream orifices. In such an embodiment, the compensator assemblies are still interchangeable for desired module functionality.

## Claims

1. A control valve compensation system for producing both a pre-compensated and a post-compensated valve, comprising:
a valve body (14) comprising a plurality of internal flow passageways and a plurality of work ports;
a pre-compensation assembly (17) configured to be removably positioned within the valve body (14), wherein the valve body (14) is adapted to function as a pre-compensated valve when the pre-compensation assembly (17) is positioned within the valve body (14);
a post-compensation assembly (18) configured to be removably positioned within the valve body (14), wherein the valve body (14) is adapted to function as a post-compensated valve when the post-compensation assembly (18) is positioned within the valve body (14); and
a selectable valve spool (13) adjustably positioned within the valve body (14) and **characterized in that** the selectable valve spool (13) and the valve body (14) are configured to be operated with each of the pre-compensation assembly and the post-compensation assembly (18).

2. The control valve compensation system of claim 1, wherein the pre-compensation assembly (17) is parallel with respect to the selectable valve spool (13) when the pre-compensation assembly (17) is positioned within the valve body (14).

3. The control valve compensation system of claim 1, wherein the post-compensation assembly (18) is parallel with respect to the selectable valve spool (13) when the post-compensation assembly (18) is positioned within the valve body (14).

4. The control valve compensation system of claim 1, wherein the pre-compensation assembly (17) is perpendicular with respect to the selectable valve spool (13) when the pre-compensation (17) assembly is positioned within the valve body (14).

5. The control valve compensation system of claim 1, wherein the post-compensation assembly (18) is perpendicular with respect to the selectable valve spool (13) when the post-compensation assembly (18) is positioned within the valve body (14).

6. The control valve compensation system of claim 1, wherein the selectable valve spool (13) comprises a plurality of control notches.

7. The control valve compensation system of claim 1, wherein the pre-compensation assembly (17) comprises a pre-compensation piston (17).

8. The control valve compensation system of claim 7, wherein the pre-compensation piston (17) comprises a pre-compensation aperture.

9. The control valve compensation system of claim 8, wherein the pre-compensation assembly comprises a pre-compensation spring.

10. The control valve compensation system of claim 9, wherein the pre-compensation spring is biased to be open absent application of force.

11. The control valve compensation system of claim 1, wherein the post-compensation assembly comprises a post-compensation piston (18).

12. The control valve compensation system of claim 11, wherein the post-compensation piston (18) comprises a post-compensation aperture.

13. The control valve compensation system of claim 12, wherein the post-compensation assembly (18) comprises a post-compensation spring.

14. The control valve compensation system of claim 13, wherein the post-compensation spring is biased to be closed absent application of force.

15. The control valve compensation system of claim 1, wherein adjustment of the selectable valve spool (13) reverses flow of a fluid through the valve body (14).

## Patentansprüche

1. Steuerventil-Kompensationssystem zur Herstellung sowohl eines vorkompensierten als auch eines nachkompensierten Ventils, aufweisend:
einen Ventilkörper (14), der mehrere innere Strömungsdurchgänge und mehrere Arbeitsanschlüsse aufweist;
eine Vorkompensationsanordnung (17), die ausgestaltet ist, um lösbar im Ventilkörper (14) positioniert zu werden, wobei der Ventilkörper (14) eingerichtet ist, um als ein vorkompensiertes Ventil zu funktionieren, wenn die Vorkompensationsanordnung (17) im Ventilkörper (14) positioniert ist;
eine Nachkompensationsanordnung (18), die ausgestaltet ist, um lösbar im Ventilkörper (14) positioniert zu werden, wobei der Ventilkörper (14) eingerichtet ist, um als ein nachkompensiertes Ventil zu funktionieren, wenn die Nachkompensationsanordnung (18) im Ventilkörper (14) positioniert ist; und
einen ansteuerbaren Ventilschieber (13), der verstellbar im Ventilkörper (14) positioniert ist und **dadurch gekennzeichnet ist, dass** der ansteuerbare Ventilschieber (13) und der Ventilkörper (14) ausgestaltet sind, um mit jeder der Vorkompensationsanordnung und der Nachkompensationsanordnung (18) betrieben zu werden.

2. Steuerventil-Kompensationssystem nach Anspruch 1, bei welchem die Vorkompensationsanordnung (17) parallel bezüglich des ansteuerbaren Ventilschiebers (13) ist, wenn die Vorkompensationsanordnung (17) im Ventilkörper (14) positioniert ist.

3. Steuerventil-Kompensationssystem nach Anspruch 1, bei welchem die Nachkompensationsanordnung (18) parallel bezüglich des ansteuerbaren Ventilschiebers (13) ist, wenn die Nachkompensationsanordnung (18) im Ventilkörper (14) positioniert ist.

4. Steuerventil-Kompensationssystem nach Anspruch 1, bei welchem die Vorkompensationsanordnung (17) senkrecht bezüglich des ansteuerbaren Ventilschiebers (13) ist, wenn die Vorkompensationsanordnung (17) im Ventilkörper (14) positioniert ist.

5. Steuerventil-Kompensationssystem nach Anspruch 1, bei welchem die Nachkompensationsanordnung (18) senkrecht bezüglich des ansteuerbaren Ventilschiebers (13) ist, wenn die Nachkompensationsanordnung (18) im Ventilkörper (14) positioniert ist.

6. Steuerventil-Kompensationssystem nach Anspruch 1, bei welchem der ansteuerbare Ventilschieber (13) mehrere Steuerkerben aufweist.

7. Steuerventil-Kompensationssystem nach Anspruch 1, bei welchem die Vorkompensationsanordnung (17) einen Vorkompensationskolben (17) aufweist.

8. Steuerventil-Kompensationssystem nach Anspruch 7, bei welchem der Vorkompensationskolben (17) eine Vorkompensationsöffnung aufweist.

9. Steuerventil-Kompensationssystem nach Anspruch 8, bei welchem die Vorkompensationsanordnung eine Vorkompensationsfeder aufweist.

10. Steuerventil-Kompensationssystem nach Anspruch 9, bei welchem die Vorkompensationsfeder vorgespannt ist, um ohne Krafteinwirkung offen zu sein.

11. Steuerventil-Kompensationssystem nach Anspruch 1, bei welchem die Nachkompensationsanordnung einen Nachkompensationskolben (18) aufweist.

12. Steuerventil-Kompensationssystem nach Anspruch 11, bei welchem der Nachkompensationskolben (18) eine Nachkompensationsöffnung aufweist.

13. Steuerventil-Kompensationssystem nach Anspruch 12, bei welchem die Nachkompensationsanordnung (18) eine Nachkompensationsfeder aufweist.

14. Steuerventil-Kompensationssystem nach Anspruch 13, bei welchem die Nachkompensationsfeder vorgespannt ist, um ohne Krafteinwirkung geschlossen zu sein.

15. Steuerventil-Kompensationssystem nach Anspruch 1, bei welchem eine Einstellung des ansteuerbaren Ventilschiebers (13) einen Fluidstrom durch den Ventilkörper (14) umkehrt.

## Revendications

1. Système de compensation de valve de commande pour produire à la fois une valve pré-compensée et une valve post-compensée, lequel système comprend :
un corps de valve (14) comprenant une pluralité de passages d'écoulement internes et une pluralité d'orifices de travail ;
un ensemble de pré-compensation (17) configuré pour être positionné de manière amovible à l'intérieur du corps de valve (14), le corps de valve (14) étant adapté de manière à fonctionner en tant qu'une valve pré-compensée lorsque l'ensemble de pré-compensation (17) est positionné à l'intérieur du corps de valve (14) ;
un ensemble de post-compensation (18) configuré pour être positionné de manière amovible à l'intérieur du corps de valve (14), le corps de valve (14) étant adapté de manière à fonctionner en tant qu'une valve post-compensée lorsque l'ensemble de post-compensation (18) est positionné à l'intérieur du corps de valve (14) ; et
un tiroir de valve pouvant être sélectionné (13) qui est positionné de manière ajustable à l'intérieur du corps de valve (14) et **caractérisé en ce que** le tiroir de valve pouvant être sélectionné (13) et le corps de valve (14) sont configurés pour fonctionner avec chacun des ensembles de pré-compensation (17) et de post-compensation (18).

2. Système de compensation de valve de commande selon la revendication 1, dans lequel l'ensemble de pré-compensation (17) est parallèle au tiroir de valve pouvant être sélectionné (13) lorsque l'ensemble de pré-compensation (17) est positionné à l'intérieur du corps de valve (14).

3. Système de compensation de valve de commande selon la revendication 1, dans lequel l'ensemble de post-compensation (18) est parallèle au tiroir de valve pouvant être sélectionné (13) lorsque l'ensemble de post-compensation (18) est positionné à l'intérieur du corps de valve (14).

4. Système de compensation de valve de commande selon la revendication 1, dans lequel l'ensemble de pré-compensation (17) est perpendiculaire au tiroir de valve pouvant être sélectionné (13) lorsque l'ensemble de pré-compensation (17) est positionné à l'intérieur du corps de valve (14).

5. Système de compensation de valve de commande selon la revendication 1, dans lequel l'ensemble de post-compensation (18) est perpendiculaire au tiroir de valve pouvant être sélectionné (13) lorsque l'ensemble de post-compensation (18) est positionné à l'intérieur du corps de valve (14).

6. Système de compensation de valve de commande selon la revendication 1, dans lequel le tiroir de valve pouvant être sélectionné (13) comprend une pluralité d'encoches de commande.

7. Système de compensation de valve de commande selon la revendication 1, dans lequel l'ensemble de pré-compensation (17) comprend un piston de pré-compensation (17).

8. Système de compensation de valve de commande selon la revendication 7, dans lequel le piston de pré-compensation (17) comprend une ouverture de pré-compensation.

9. Système de compensation de valve de commande selon la revendication 8, dans lequel l'ensemble de pré-compensation (17) comprend un ressort de pré-compensation.

10. Système de compensation de valve de commande selon la revendication 9, dans lequel le ressort de pré-compensation est sollicité pour être ouvert en l'absence d'application de force.

11. Système de compensation de valve de commande selon la revendication 1, dans lequel l'ensemble de post-compensation comprend un piston de post-compensation (18).

12. Système de compensation de valve de commande selon la revendication 11, dans lequel le piston de post-compensation (18) comprend une ouverture de post-compensation.

13. Système de compensation de valve de commande selon la revendication 12, dans lequel l'ensemble de post-compensation (18) comprend un ressort de post-compensation.

14. Système de compensation de valve de commande selon la revendication 13, dans lequel le ressort de post-compensation est sollicité pour être fermé en l'absence d'application de force.

15. Système de compensation de valve de commande selon la revendication 1, dans lequel l'ajustement du tiroir de valve pouvant être sélectionné (13) inverse l'écoulement d'un fluide à travers le corps de valve (14).
